# EUROPEAN PATENT APPLICATION

(11) **EP 1 304 834 A1**
(43) Date of publication of application: **23.04.2003**
(21) Application number: 01943858.9
(22) Date of filing: 28.06.2001
(51) Int. Cl.: H04L 12/28, G06F 13/14, G06F 13/38

(54) **DEVICE FOR RECOVERING CONNECTION**

(30) Priority: 28.06.2000 JP 2000195133
(71) Applicant: NEC Corporation, Minato-ku, Tokyo 108-8001 (JP)
(72) Inventor: SAITO, Tomoki c/o NEC Corporation, Minato-ku, Tokyo 108-8001 (JP)
(74) Representative: VOSSIUS & PARTNER
(86) International application number: JP0105556
(87) International publication number: WO02001806

(57) **Abstract**

A connection recovery unit is connected onto a bus, which is capable of serial and bi-directional packet communication and connecting a plurality of equipment together. The connection recovery unit includes: a connection information storage member (24) for storing a logical connection status of the equipment connected to the bus; and a determination member (26) for determining a priority order for a logical connection status of the equipment connected to the bus based on the logical connection status stored in the connection information storage member and a logical connection status stored in the other equipment connected to the bus, when the bus communicates initializing information thereto.

## Description

### FIELD OF THE INVENTION

The present invention relates to a connection recovery unit and, more particularly, to a connection recovery unit which performs a connection recovery control of the equipment connected to a bus capable of connecting personal computers, peripheral equipment thereof, or audio/video equipment (referred to as AV equipment hereafter), such as in a network using a highspeed serial bus, IEEE1394 ("IEEE Standard for a High Performance Serial Bus" defined in IEEE Std.1994-1995).

### BACKGROUND OF THE INVENTION

In recent years, the diffusion rate of personal computers to the general household is increased, and a variety of techniques for raising the utilization factor thereof for the general users are developed. In addition, it is general to process image and voice, for example, as digital data, and accordingly, it is generally conducted in a household to process the data of the digital video camera by using a personal computer. In she circumstances as described above, USB (universal serial bus) and IEEE1394 are devised as techniques for improving the connectivity of the computer with peripheral equipment, such as printer and image scanner, and some of those are now in practical use.

In contrast to the USB which requires an intervening computer for connecting the peripheral equipment, IEEE1394 does not require the presence of such a computer for the connection, and thus is capable of transferring main signals and control signals between the audio equipment such as the digital video camera and the audio equipment as well as connecting the personal computer with the peripheral equipment such as printer, hard disk, or image scanner. This means that a network can be configured by connecting together a plurality of equipment each adapted to IEEE1394 (referred to as "1394 equipment" hereinafter), and thus IEEE1394 is considered as a promising standard to be used for a household LAN (local area network).

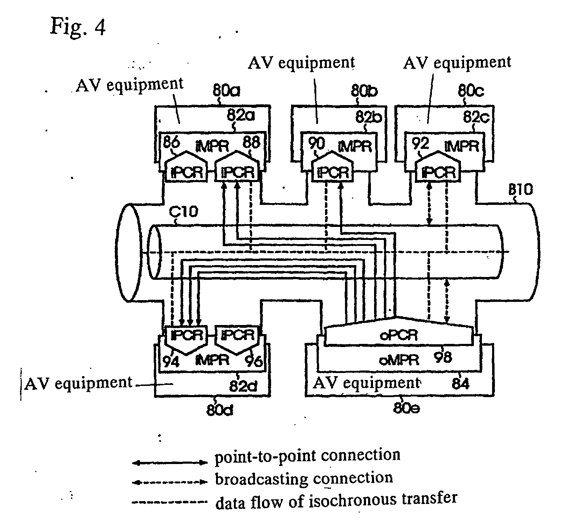

Fig. 4 exemplifies a network of AV equipment, or 1394 equipment, configured by using an IEEE1394 bus. In the example shown in Fig. 4, five AV equipment, or 1394 equipment, 80a to 80e are connected to the IEEE1394 bus B10. In order to associate the AV equipment with the isochronous channels during transferring data between the AV equipment, each AV equipment is provided with a master plug register (MPR) and a plug control register (PCR) defined in IEC61883 standard ("Consumer Audio/Video equipment-Digital interface-Part 1:General", Reference number CEI/IEC 61883-1:1998).

These registers include input registers and output registers for inputting/outputting the audio data and video data, wherein the master plug registers include input master plug registers (iMPR) and output master plug registers (oMPR), and the plug control registers include input plug control registers (iPCR) and output plug control registers (oPCR).

In the example shown in Fig. 4, AV equipment 80a to 80d are provided with iMPRs 82a to 82d, respectively, whereas AV equipment 80e is provided with an oMPR 84. iMPR 82a to iMPR 82d are provided with iPCRs 86 and 88, iPCR 90, iPCR 92, and iPCRs 94 and 96, respectively, whereas oMPR 84 is provided with oPCR 98. In Fig. 4, C10 denotes the isochronous channels. When an isochronous transfer is performed between the AV equipment connected to the IEEE1394 bus B10, the isochronous channel C10 is established for effecting the data transfer.

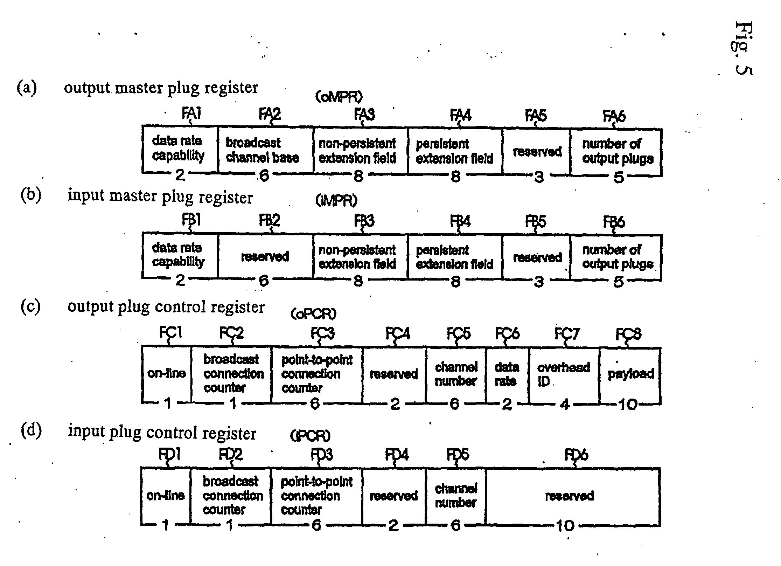

Fig. 5 shows the detailed formats of the registers, wherein
(a) shows the format of the output master plug register (oMPR),
(b) shows the format of the input master plug register (iMPR), (c) shows the format of the output plug control register (oPCR), and
(d) shows the format of the input plug control register (iPCR). These formats are defined by standard. It is to be noted that the number given to the bottom of each format in the drawing expresses the number of bits of each data constituting the format.

A single oMPR 84 or a single iMPR 82a to 82d is provided in each of the AV equipment 80a to 80e, and manages the number of oPCRs 98 and iPCRs 86 to 96 in the AV equipment. The number of each of oPCRs and iPCRs to be provided in a single AV equipment is 31 at the maximum. There are provided, in the oPCRs and iPCRs, fields FC2 and FD2, respectively, for storing the information representing the presence or absence of the broadcasting connection, fields FC3 and FD3, respectively, for storing the information representing the number of point-to-point connections, and fields FC5 and FD5, respectively, for storing the information representing the isochronous channel number, wherein all the information is needed for establishing the connection. In addition, there are also provided, in the oPCR, a field FC6 storing the information representing the transfer rate of the isochronous data flow and a field FC8 for storing the information representing the band thereof. The register address wherein MPR and PCR are described is described from FFFFF00900ₕ address to FFFFF009FFₕ address (h represents the hexadecimal notation) in the address space CSR (Command and Status Register) defined in IEEE1394 standard.

By suitably setting these PCRs, the isochronous data output from the AV equipment can set up the path of the isochronous data flow between the AV equipment, whereby the data transfer can be effected between arbitrary AV equipment. Connections using the PCRs will be described hereinafter, again with reference to Fig. 4.

The connections using PCRs are categorized in two types including point-to-point connection and a broadcasting connection.

The point-to-point connection is such that one of oPCRs of an AV equipment is connected to one of iPCRs of another AV equipment via an isochronous channel. For example, in Fig. 4, the data between oPCR 98 of AV equipment 80e and iPCR 90 of AV equipment 80b corresponds this type. This connection is associated with a protection so that only the equipment or the control application which established the connection can exclusively rewrite the register.

In addition, a plurality of point-to-point connections can exist in a single PCR. In the example shown in Fig. 4, for example, this applies to the connection between oPCR 98 of AV equipment 80e and iPCR 94 of AV equipment 80d. In this case, as illustrated in the drawing, three point-to-point connections exist using the same isochronous data flow.

The broadcasting connection includes two connections: a broadcasting-out connection wherein an oPCR of an AV equipment is connected to a single isochronous channel; and a broadcasting-in connection wherein one of iPCRs of another AV equipment is connected to the single isochronous channel.

For example, the connection between oPCR 98 of AV equipment 80e and the broadcasting channel number (usually set at "63") of the isochronous data corresponds to the broadcasting-out connection, whereas the connection between iPCR 92 in AV equipment 80c and the broadcasting channel number of the isochronous data corresponds to the broadcasting-in connection.

In the two types of the broadcasting connection, the connection for the broadcaster and the connection for the audience are set independently of each other, or without depending on the state of each other. In addition, any equipment or control application, which does not established the broadcasting connection, can rewrite the PCR and cut-off the connection, and also can deprive the broadcasting isochronous channel of the equipment then transmitting.

The start of the data transmission and reception, after the connection is established between the AV equipment, can be effected by controlling the transmitting-side AV equipment and the receiving-side AV equipment by using an AV/C (audio video control) command (AV/C Digital Interface Command Set version 3.0, 1394 Trade Association, April 15, 1998, or "AV/C Tape Recorder/Player Subunit Specification version 2.", 1394 Trade Association, January 11, 1998). In the AV/C command, commands such as reproduction, stop, rapid feed, back-wind, picture recording, pause and slowdown are available. The transmission/reception of the AV/C command on the 1394 bus is effected by using the function control protocol defined in IEC61883 standard. For ending the isochronous transmission, the settings of the PCRs of the transmitting/receiving AV equipment are cancelled for breaking the connection.

In the connections using the PCRs as described above, insertion or removal of the AV equipment, for example, causes occurrence of a bus reset for initialization of the bus, and the PCRs are also initialized at the same time. This once involves cancellation of all the connections which are then established in the bus. The procedure for recovering the cancelled connections to the initial state before the bus reset is prescribed in IEC61883-1. In IEC61883-1, the attribution of the connection is prescribed, as in the case of the point-to-point connection being protected for the equipment (or application) that established the connection.

However, any right is not prescribed for the AV equipment, for which the connection is established, to control the equipment by using the AV/C command. JP Patent Application 11-215972 describes to which equipment (or application) the right for performing the control using the AV/C command should be assigned, in relation to the AV equipment for which the connection is established.

The summary of the technique described therein is such that a controller stores the order of the connection which the controller itself established, and shares the stored information with other controllers, wherein one of the plurality of controllers sharing the connection therebetween is assigned the right for controlling the AV equipment. The practical procedure for determining the controlling right is such that one of the controllers which first established the connection is basically assigned the controlling right and one of the controllers storing a lowest value in the counter counting the point-to-point connection of the PCR among the controllers storing such information.

By using the techniques as described above, it is possible to establish or cancel the connections between the AV equipment, determine the controlling right for the AV equipment, and recover the cancelled connections. If a bus reset occurs and subsequently the cancelled connection is to be recovered, there are some problems as described hereinafter. In the procedure prescribed in IEC61883-1 for recovering the cancelled connections, the order of the connection recovery is not prescribed for the case where a plurality of point-to-point connections are superposed.

Accordingly, the plurality of controllers that established the superposed connections may operate for re-establishment in disorder and independently of each other by using the occurrence of the bus reset as a trigger. As for the assignment of the controlling right, if the controlling right is to be assigned to one of the controllers which first established the connection in accordance with the teaching of Patent Application 11-215972, there arises a problem such that if the order of the superposition is changed between the states before and after the bus reset, the right for controlling the AV equipment is changed accordingly.

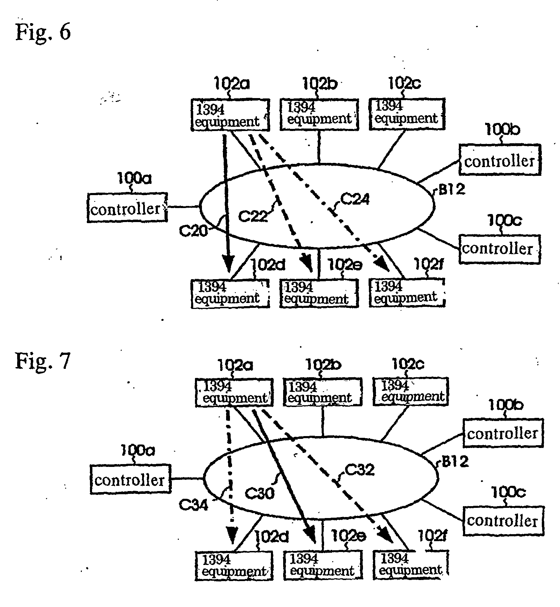

The above problem is more specifically described hereinafter. Fig. 6 shows an example of the connections established in the network formed by AV equipment (1394 equipment) before occurrence of the bus reset. In the example shown in Fig. 6, three controllers 100a to 100c are connected to the IEEE1394 bus B12, and in addition, six 1394 equipment 102a to 102f are connected thereto. It is assumed here that 1394 equipment 102a operates as a transmitter, whereas 1394 equipment 102d to 102f operate as receivers.

It is also assumed that a point-to-point connection C20 is established between 1394 equipment 102a and 1394 equipment 102d, a point-to-point connection C22 is established between 1394 equipment 102a and 1394 equipment 102e, and a point-to-point connection C24 is established between 1394 equipment 102a and 1394 equipment 102f, whereby three connections are superposed on 1394 equipment 102a.

It is also assumed that the point-to-point connection C20 is established by a controller 100a, the point-to-point connection C22 is established by a controller 100c, and the point-to-point connection C24 is established by a controller 100b, and that the order C20, C22 and C24 as recited herein is the order of the establishment of the connections. If the control as to the assignment of the controlling right is such that the controller which first established the connection is assigned the right for controlling the 1394 equipment, then the right for controlling 1394 equipment 102a on which three connections are superposed is assigned to controller 100a which first-established the point-to-point connection C20.

In the circumstance of connections as described above, a case is considered wherein a bus reset occurred and three controllers 100a to 100c recovered the connections. Since each of controllers 100a to 100c recovered only the connection which the each controller itself established, the order of the connections established by three controllers 100a to 100c may be changed. Fig. 7 shows an example of the connections established after the bus reset occurred in the network formed by the AV equipment (1394 equipment).

After the recovery, it is assumed that, as shown in Fig. 7, connection C30 is first established by controller 100c, connection C32 is then established by controller 100b, and connection C34 is lastly established by controller 100a. In this case, since controllers 100a to 100c recover the respective connections independently of each other or without any association, the right for controlling 1394 equipment 102a is assigned to controller 100c.

As described above in connection with the conventional technique, since the state shown in Fig. 6 wherein the connections are superposed in the order of C20, C22 and C24 before the bus reset is shifted to the state shown in Fig. 7 wherein the connections are superposed in the order of C30, C32 and C34 after the bus reset, the right for controlling 1394 equipment 102 is deprived of controller 100a by controller 100c after the bus reset.

### SUMMARY OF THE INVENTION

The present invention is conceived based on the circumstances as described above, and it is an object of the present invention to provide a connection recovery unit which is capable of re-establishing the connections after the bus reset in the order of the connections established before the bus reset, in the case where the connections cancelled by the bus reset are recovered on the bus, such as a 1394 bus, which is capable of serial and bi-directional packet communication and connecting a plurality of AV equipment together.

A first aspect of the connection recovery unit according to the present invention is directed to a connection controller connected onto a bus, which is capable of serial and bi-directional packet communication and connecting a plurality of equipment together, the connection controller including: a connection information storage member for storing a logical connection status of the equipment connected to the bus; and a determination member for determining priority order of a logical connection status of the equipment connected to the bus based on the logical connection status stored in the connection information storage member and a logical connection status stored in the other equipment connected to the bus, when the bus communicates initializing information thereto.

A connection recovery unit according to the first aspect features that the connection information storage member stores information of data-transmitting-side equipment and information of data-receiving-side equipment in pair as the logical connection information.

A connection recovery unit according to the first aspect features that the connection information storage member stores information for discriminating transmitting-side equipment and receiving-side equipment, information of input or output of the equipment and information of number of one-to-one connections.

A connection recovery unit according to the first aspect features that the logical connection information represents at least the number of one-to-one connections.

A connection recovery unit according to the first aspect features that the bus is compliant with IEEE1394 bus.

A second aspect of the connection recovery unit according to the present invention is directed to a connection recovery unit connected to a bus compliant with IEEE1394 bus for controlling connections of a plurality of equipment connected to the bus, the connection recovery unit includes: a plug control register controller for controlling packet transmission/reception via the bus, controlling plug control registers in other equipment, and generating information representing connections between the equipment via the bus; a connection information storage member for storing a connection status generated by the plug control register controller; and a connection re-establishment controller for receiving information stored in the connection information storage member and information as to the plug control register in other equipment connected onto the bus when a bus reset is communicated from the bus, determining information for controlling the connection timings between the equipment and the plug control register in the other equipment, and communicating these information to the plug control register controller.

A connection recovery unit according to the second aspect of the present invention features that the connection information storage member stores the information of the output plug control register constituting the one-to-one connection information and information of the input plug control register in a pair.

The connection information storage member may feature that it includes a field for representing the output or input plug control register, a field for representing an order number of the plug control register provided in the equipment, a field for representing the value of the on-to-one connection information of the plug control register, and a subject-node ID field for representing the node ID of the equipment in which the plug control register is provided.

In addition, the connection information storage member may feature that it is disposed in a control status register space prescribed in IEEE1212.

According to the present invention, since the connection status (connection order) before the initialization is stored after the initialization even when the bus is initialized due to the communication of the initializing information from the bus, the connections can be re-established after the initialization in accordance with the connection order established before the initialization.

More specifically, the present invention resides in that the connections are re-established in accordance with the connection order established before the bus reset, in the case of performing connection recovery after the bus reset. For achieving this operation, in the preferred embodiment of the present invention, among the contents set in the plug control register, the value of the number of point-to-point connections (referred to as PPC value hereinafter) is stored. During the connection recovery, the connections are re-established when the PPC value of the plug control register of the equipment desired to be set therein equals the PPC value stored in the controller minus one.

If the PPC value of the plug control register of the equipment which is desired to be set during the connection recovery does not become equal to the PPC value stored in the controller minus one due to the cut-off of the controller, absence of operation of the controller which has a priority for the connection re-establishment or so, then the re-establishment is performed by reducing one from the stored value after a specified time length elapsed.

By using the methods as described above, connection re-establishment is achieved in accordance with the connection order established before the bus reset.

### BRIEF DESCRIPTION OF THE DRAWINGS

Fig. 1 is a block diagram showing the connection recovery unit according to an embodiment of the present invention.
Fig. 2 is a point-to-point connection information table stored in the connection information storage member 24.
Fig. 3 is a flowchart showing operation of the connection re-establishment controller 26 provided in the connection recovery unit according to the embodiment of the present invention includes.
Fig. 4 shows an example of the network of 1394 equipment, or AV equipment, configured by using an IEEE1394 bus.
Fig. 5 is a diagram showing the detailed formats of the registers.
Fig. 6 shows an example of connections established before occurrence of a bus reset in the network configured by AV equipment (1394 equipment).
Fig. 7 shows an example of the connections established after the occurrence of the bus reset in the network configured by AV equipment (1394 equipment).

### BEST MODE OF THE INVENTION

Hereinafter, with reference to the drawings, a connection controller according to an embodiment of the present invention will bedescribed in detail.

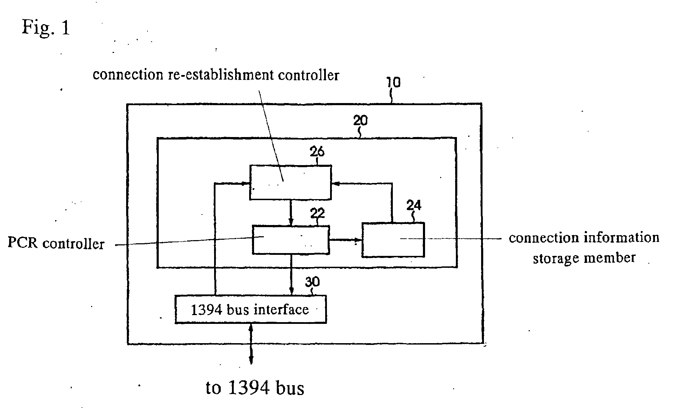

Fig. 1 is a block diagram showing the connection recovery unit according to the embodiment of the present invention. In the example illustrated in Fig. 1, the present invention is applied to a 1394 bus. In Fig. 1, the connection recovery unit 10 according to the embodiment of the present embodiment is roughly comprised of a connection recovery controller 20 and a 1394 bus interface 30. The connection recovery controller 20 is comprised of a plug control register controller (PCR controller) 22, a connection information storage member 24, and a connection re-establishment controller 26.

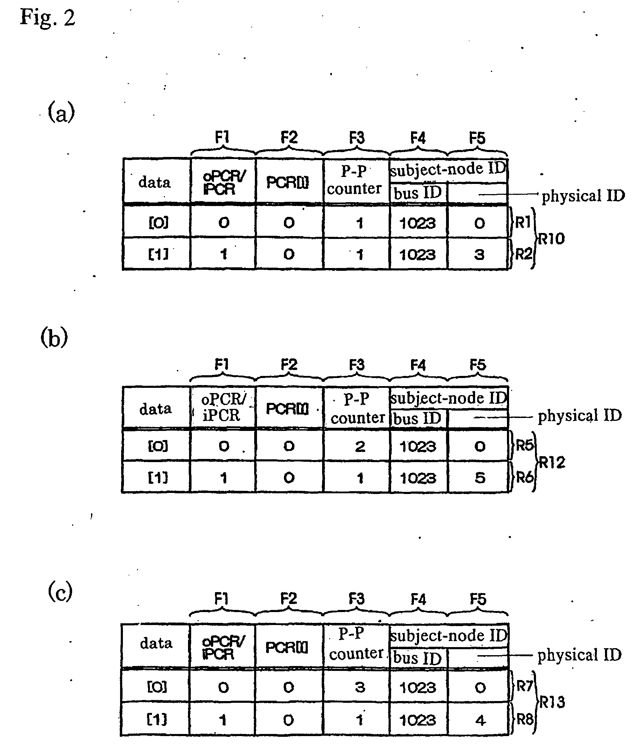

The PCR controller 22 performs establishment and cut-off of the connections based on information of the point-to-point connections between the AV equipment which are connected onto the 1394 buses, and performs programming of PCR of the AV equipment via the 1394 bus interface 30. The PCR controller 22 stores the contents of the setting of the PCR of the AV equipment in the connection information storage member 24, after the point-to-point connection is established. The stored contents stored in the connection information storage member 24 are referred to as a point-to-point connection information table, hereinafter. Fig. 2 shows the point-to-point connection information table stored in the connection information storage member 24.

In order to set the oPCR and iPCR in pair upon performing a point-to-point connection, the information of both the oPCR and iPCR is stored in pair after the point-to-point connection is established. The pair of information of the oPCR and iPCR is herein referred to as P2P information pair. The detailed contents of a P2P information pair will be described with reference to Fig. 2. It is to be noted that the description with reference to Fig. 2 is conducted assuming that the connection recovery unit 10 of the embodiment of the present invention shown in Fig. 1 is provided in each of the controllers 100a to 100c shown in Figs. 6 and 7; (a) shows the point-to-point connection information table stored in the connection information storage member 24 of controller 100a, (b) shows the point-to-point connection information table stored in the connection information storage member 24 of controller 100b, and (c) shows the point-to-point connection information table stored in the connection information storage member 24 of controller 100c. In this case, the physical IDs of 1394 equipment and the controllers in Fig. 6 and Fig. 7 are such as follows: the physical ID of 1394 equipment 102a is "0", the physical ID of 1394 equipment 102b is "1", the physical ID of 1394 equipment 102c is "2", the physical ID of 1394 equipment 102d is "3", the physical ID of 1394 equipment 102e is "4", the physical ID of 1394 equipment 102f is "5", the physical ID of controller 100a is "6", the physical ID of controller 100b is "7", and the physical ID of controller 100c is "8".

The fields F1 in tables (a) to (c) of Fig. 2 represent whether the PCR is an iPCR or an oPCR, wherein "0" is stored for representing an oPCR and "1" is stored for representing an iPCR. The PCR number mounted on the AV equipment is stored in the field F2. The number of point-to-point connections of the PCR is stored in the field F3. It is to be noted that the value stored in this field F3 is referred to as the PPC value hereinafter. A bus ID which represents the most significant ten bits of ID of the subject node, i.e., the AV equipment for which the PCR controller 22 has set the PCR, and a physical ID which represents the least significant six bits thereof are stored in the fields F4 and F5, respectively.

In the example shown in (a) of Fig. 2, the P2P information pair is a record R10 including a record R1 and record R2. In the example shown in (b) of Fig. 2, the P2P information pair is a record R12 including a record R5 and record R6. In the example shown in (c) of Fig. 2, the P2P information pair is a record R13 including a record R7 and record R8.

More specifically, with reference to Fig. 2, the value in field F1 of the record R1 is "0", the value in the field F3 is "1", the bus ID in the field F4 is "1023", and the physical ID in the field F5 is "0". In the record R1, since the value in the field F1 is "0", such a record specifies an AV equipment for transmitting data. That is, the contents of record R1 indicates that the AV equipment transmitting the data is an AV equipment having a physical ID of "0" and connected to the bus having a bus ID of "1023", and the number of point-to-point connections thereof is "1".

Since the value in the field F1 of the record R2 which forms a pair together with the record R1 is "1", the record R2 specifies an AV equipment receiving the data. That is, based on the contents of the record R2, the AV equipment receiving the data is an AV equipment having a physical ID of "3" and connected to the bus having a bus ID of "1023", and the number of point-to-point connections thereof is "1". The point-to-point connection information table shown in (a) of Fig. 2, which is stored in controller 100a shown in Fig. 6, for example, shows that controller 100a storing therein the P2P information pair in the record R10 shown in (a) of Fig. 2 established a single point-to-point connection wherein the AV equipment having a physical ID of "0" transmits the data to the AV equipment having a physical ID of "3". In this way, i.e., by storing the point-to-point connection information table wherein oPCR and iPCR are paired, the connections between the AV equipment can be stored in the connection information storage member 24.

The connection re-establishment controller 26, after receiving a bus reset notification via the 1394 bus interface 30, receives the information stored in the connection information storage member 24, and also receives the PCR information of the equipment which is related to this information via the 1394 bus interface 30. The connection re-establishment controller 26 then determines, based on these information, the timing of connections between the equipment and information for controlling the PCRs of the other equipment, and notifies the PCR controller 22 of the information. The PCR controller 22, after receiving the connection information, recovers the point-to-point connection via the 1394 bus interface 30 without delay.

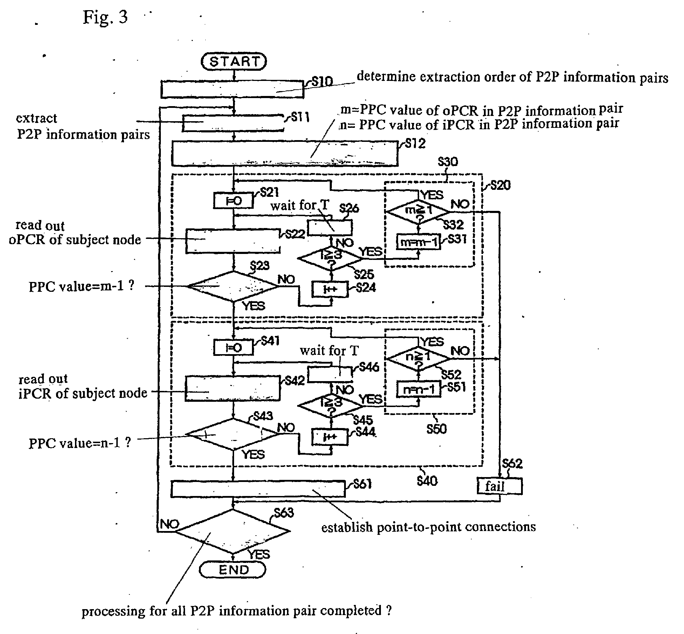

Operation of the connection recovery unit according to the embodiment of the present invention and having the configuration described above will now be described. Fig. 3 is a flowchart showing operation of the connection re-establishment controller 26 provided in the connection recovery unit of the embodiment of the present invention. After start of the operation, processing is conducted for determining the order of extraction for the P2P information pairs stored in the connection information storage member 24 (step S10). In this processing, the P2P information pairs in the point-to-point connection information tables are sorted based on the ascending order of the PPC values of oPCR in each pair. It is to be noted that the order of P2P information pairs is not considered if the PPC values therefor are equal.

After the order of extraction for the P2P information is determined, processing is conducted for the extraction of the P2P information pairs (step S11). In this processing, the "P2P information pairs" are read from the point-to-point connection information in the order of arrangement thereof, i.e., in the ascending order of the PPC values. Each time one of the P2P information pairs is read out, the PPC value of oPCR in the P2P information pair thus extracted in step S11 is stored in the variable m, and at the same time, the PPC value of iPCR in the P2P information pair thus extracted in step S11 is stored in the variable n (step S12) . Here, the variables m and n are such for storing integers equal to or above zero.

After the above procedure is finished, in the processing of steps S20 and S40, the value of PCR of the subject node is compared against the contents of the variables "m" and "n" stored in the processing of step S12, for examining whether the situation allows recovery of the point-to-point connections. In these steps, the value of oPCR of the subject node is compared against the value of variable "m" in the step S20, whereas the value of iPCR of the subject node is compared against the value of variable "n" in step S40. The subject node is obtained from the subject node ID in the P2P information pair. It is a matter of course that the subject node is determined by comparing the node IDs before and after the bus reset, if the node ID of the subject node is changed due to the bus reset.

The processing of step S20 will be detailed hereinafter. Upon start of the processing of step S20, an initialization of loop variable "i" is first conducted to set the value of the loop variable "i" at "0" (step S21). Subsequently, oPCR of the subject node is read out (step S22). Thereafter, it is judged whether or not the PPC value of the oPCR read out in the processing of step S22 is equal to the value m-1 (step S23).

If the judgement in the processing of step S23 indicates an inequality, i.e, if the result of judgement in step S23 is "NO", then the process advances to step S24. In step S24, processing for incrementing the loop variable "i", i.e., processing for adding "1" to the loop variable "1" is conducted. Thereafter, it is judged whether or not the value of the loop variable "i" is equal to or above "3" (step S25), and if the loop variable "i" is less than "3" then the process advances to step S26, followed by waiting for a time length of "T" and subsequently returning to the processing of step S22.

On the other hand, if it is judged in the processing of step S25 that the value of the loop variable "i" is equal to or above "3", i.e., if the result of the judgement in step S25 is "YES", then the process advances to step S30. In step S30, processing is conducted for the case wherein the PPC value of oPCR of the subject node does not become equal to m-1 after waiting a specified time length (2T in this example). More specifically, the value of the variable "m" is decremented, i.e., decreased by one in step S31, letting the decremented value to be a new value of "m". Then, it is judged whether or not the value of the updated variable "m" is equal to or above "1", returning to the processing of step 21 if the value is equal to or above "1", whereas advancing to the processing of step S62 if the value is less than "1".

If it is judged in step S23 as described above that the PPC value of oPCR read out in the processing of step 22 is equal to the value of m-1, i.e., the result of judgment in step S24 is "YES", then the process advances to step S41, wherein the value of loop variable "i" is initialized to be set at "0". Subsequently, iPCR of the subject node is read out (step S42), and it is judged whether or not the PPC value of iPCR read out in the processing of step S42 is equal to the value of n-1 (step S43).

If it is judged in the processing of step S43 that both are not equal, i.e., if the result of judgement in step S43 is "NO", then the process advances to step S44. In step S44, the processing is such that the loop variable "i" is incremented, i.e., the loop variable "i" is added by one. Subsequently, it is judged whether or not the value of loop variable "i" is equal to or above "3" (step S45), and the process advances to step S46 if the loop variable "i" is less than "3", waiting for a specified time length "T" to return to the processing of step S42.

On the other hand, if it is judged in the processing of step S45 that the value of loop variable "i" is equal to or above 3, i.e., if the result of judgement in step S45 is "YES", then the process advances to step S50. In step S50, similarly to step S30, processing is conducted for the case wherein the PPC value of iPCR of the subject node does not become equal to n-1 after waiting a specified time length (2T in this example). More specifically, the value of variable "n" is decremented, i.e., reduced by one in step S51, letting the decremented value to be a new value of "n". It is judged whether the value of the updated variable "n" is equal to or above "1", returning to step S41 if the value is equal to or above "1", whereas advancing to the processing of step S62 if the value is less than "1". In step S62, the process is ended while displaying a fail in the re-establishment of point-to-point connections.

If it is judged in step S43 as described above that the PPC value of iPCR read in the processing of step S42 is equal to the value of n-1, i.e., the result of judgement in step S43 is "YES", then the process advances to step S61, wherein a point-to-point connection is established between oPCR and iPCR of the subject node. After the point-to-point connection is established, it is judged whether or not all the P2P information pairs in the point-to-point connection information are processed (step S63). If the processing is not completed, i.e., the result of judgement in step S63 is "NO", then the process returns to step S11, wherein a next point-to-point connection is subjected to re-establishment processing. On the other hand, if it is judged in step S63 that the processing for all the P2P information pairs is completed, i.e., if the result of judgment is "YES", then the process for re-establishment of the point-to-point connections is ended.

Although an embodiment of the present invention is described heretofore, the present invention is not limited to the above embodiment, and may be changed for design thereof within the scope of the present invention. For example, although the present invention is exemplified by the case wherein the present invention is applied to the IEEE1394 standard, the present invention cam be applied to any connection controller so long as the connection controller is connected to a bus which performs a serial and bi-directional packet transmission and can connect a plurality of AV equipment together.

## Claims

1. A connection recovery unit connected onto a bus, which is capable of serial and bi-directional packet communication and connecting a plurality of equipment together, said connection recovery unit comprising:
a connection information storage member for storing a logical connection status of the equipment connected to the bus; and
a determination member for determining a priority order for a logical connection status of the equipment connected to the bus based on the logical connection status stored in the connection information storage member and a logical connection status stored in the other equipment connected to the bus, when the bus communicates initializing information thereto.

2. The connection recovery unit according to claim 1, wherein said connection information storage member stores information of data-transmitting-side equipment and information of data-receiving-side equipment in pair as said logical connection information.

3. The connection recovery unit according to claim 2, wherein said connection information storage member stores information for discriminating transmitting-side equipment and receiving-side equipment, information for judging input or output of the equipment and information of number of one-to-one connections.

4. The connection recovery unit according to claim 3, wherein said logical connection information represents at least a number of one-to-one connections.

5. The connection recovery unit according to one of claims 1 to 4, wherein the bus is compliant with IEEE1394 bus.

6. A connection recovery unit, connected to a bus compliant with IEEE1394 bus, for controlling connections of a plurality of equipment connected to the bus, said connection recovery unit comprising:
a plug control register controller for controlling packet transmission/reception via the bus, controlling plug control registers in other equipment, and generating information representing connections between the equipment via the bus;
a connection information storage member for storing a connection status generated by said plug control register controller; and
a connection re-establishment controller for receiving information stored in said connection information storage member and information as to plug control registers in other equipment connected onto the bus, when a bus reset is communicated from the bus, said connection re-establishing controller determining information for controlling connection timings between the equipment and the plug control register in the other equipment, and communicating these information to said plug control register controller.

7. The connection recovery unit according to claim 6, wherein said connection information storage member stores information of an output plug control register constituting information of a one-to-one connection and information of the input plug control register in a pair.

8. The connection recovery unit according to claim 6 or 7, wherein said connection information storage member includes a field for representing the output or input plug control register, a field for representing an order number of the plug control register provided in the equipment, a field for representing the value of the on-to-one connection information of the plug control register, and a subject-node ID field for representing the node ID of the equipment in which the plug control register is provided.

9. The connection recovery system according to one of claims 6 to 8, wherein said connection information storage member is disposed in a control status register space prescribed in IEEE1212.
